# EUROPEAN PATENT APPLICATION

(11) **EP 2 204 271 A1**
(43) Date of publication of application: **07.07.2010**
(21) Application number: 08835990.6
(22) Date of filing: 24.09.2008
(51) Int. Cl.: B29C 45/17, B29C 49/42, C08L 29/04, C08K 5/053

(54) **METHOD FOR THE INJECTION OF POLYETHENOL PARTS AND RESULTING PARTS**

(30) Priority: 04.10.2007 ES 200702603
(71) Applicant: Plásticos Hidrosolubles, S.l., 46138 - Rafelbuñol - Valencia (ES)
(72) Inventor: MORENO LÓPEZ, Elena, 46138 - Rafelbuñol - Valencia (ES)
(74) Representative: Pérez Sánchez, Manuel Jesús
(86) International application number: PCT/ES2008/000604
(87) International publication number: WO 2009/043949

(57) **Abstract**

The invention relates to a method for the injection of polyethenol parts, in which polyethenol pellets (4) are poured into a hopper or similar device (5) which delivers same to a single-screw extruder (1) provided with means (8) for the forced discharge of gases. The polyethenol is heated to a temperature of between 170 and 250°C and subsequently conveyed to an injector (2) provided with a heating element (12) and a set of essentially conical, flared-section pipes (6) having a diameter oversized by between 20% and 40%. The injector (2) introduces the molten polyethenol pellets into an injection or blow mould (3), also heated (13), in which slow cooling is initiated. Finally, demoulding is carried out at a temperature of between 25 and 35°c.

## Description

### Technical Field

As expressed in the title of this specification, the object of the present invention relates to a method for the injection of polyethenol parts, of the type used in manufacturing water-soluble parts, and resulting parts.

### Background of the Invention

On certain occasions both in industry and in some uses in daily life, it is necessary to use products, parts or other elements which dissolve upon contacting water.

One reason is so that they are biodegradable for environmental purposes; an example would be the use of hunting rounds, tampon applicators, golf balls, insecticide dispensers or urns for holding ashes of the deceased which are typically left behind after they are used.

Another reason for the use of said products is that they must have a limited service life for reasons of their use; this would be the case of certain selective fishing net devices which would partially dissolve after the fish are caught in order to allow the smaller fish to get away.

One of the properties traditionally attributed to plastics is their hydrophobic behaviour, i.e., their impermeability and insolubility in water. However, there are plastics that can dissolve in water, such as polyethenol.

This material has the property of dissolving in water in certain conditions, which makes it very useful in some applications, such as those mentioned above.

Polyethenol is a synthetic polymer that is obtained from another synthetic polymer, polyvinyl acetate or polyethanoate. The acetate groups of the polyethanoate chain hydrolyze under standard conditions in methanol, hydroxyl -OH groups remaining and methyl acetate being detached. Polyethenol is thus obtained.

This chemical reaction can be controlled in a rather precise manner to hydrolyze a desired percentage of acetate groups (degree of hydrolysis).

The new polymer has a structure that is very similar to that of polyethylene, however, the presence of the -OH groups has very significant effects. The most important effect is that the polymer is hydrophilic, the water solubility of which is a function of the proportion of -OH groups present in the chain and of the dissolution temperature. Therefore, when between 80% and 89% of the acetate groups have been substituted with -OH groups, the resulting polymer is soluble in cold water; however, when almost 100% of the acetate groups have been substituted, the polymer is soluble only at temperatures exceeding 85°C.

All the dissolved amounts of polyethenol are biodegradable and its derivatives are non-toxic.

Examples of these applications are those described in patent US-3,186,869, COATED FILM FOR LAUNDRY PACKAGE and patent US-3,322,674 LAUNDRY PACKAGE, which describe water-soluble films and items for washing clothes. The water-soluble films of these references are internally coated with a wax, or other material, in order to prevent the content of the container from interacting with the material in the form of film and degrading the solubility characteristics thereof.

Another interesting application of polyethenol is the production of surgical thread, which is used for suturing in surgery. For this application, different types of threads are used with different degrees of solubility, depending on how fast the thread is to dissolve. An example of this application is described in patent E88113740.

However, in normal conditions and according to conventional manufacturing processes in which polyethenol is used, said polymer is only valid for forming techniques by extrusion and extrusion-blowing, such as those described in the aforementioned patents, being able to make with these patents products such as films, threads and tubular bands; this is because normal polyethenol generally has a serious drawback: it is virtually impossible to use it with injection techniques, such as injection-moulding or injection-blowing due to its high degree of fluidity.

### Description of the Invention

In order to overcome this drawback, the novel method for the injection of polyethenol parts, object of the present specification, has been conceived.

In general terms, the present invention relates to a new method for the injection of parts from polyethenol pellets provided with a melt flow rate comprised between 10 and 30 gr/10 min, and with an amount of volatile components equal to or less than 10%; this polyethenol has features giving it a slow compaction, as well as a slow setting and solidification; hence it is necessary to define a novel method for the injection of parts using this product.

Furthermore, the pellets must be tempered such that when the polyethenol is melted, it assures the aforementioned melt flow rate and moisture content because the general melt flow rate of untreated pellets of this type is between 3 and 5 gr/10 min.

The new method for the injection of polyethenol parts must be complemented with moulding techniques or with blowing techniques, depending on the end product to be obtained.

In the event of injection-moulding, the method requires the following elements; extruder, injector and mould.

To start, the polyethenol pellets are poured into a hopper or similar device which delivers same to a single-screw extruder provided with means for the forced discharge of gases, with a gas discharge capacity between 10% and 50% greater than the conventional capacity in a non-water soluble polymer. The polyethenol must be heated and reach its molten state at a stable temperature of between 170 and 250°C, at which time it has a melt flow rate of between 10 and 30 gr/10 min. Another aspect to be taken into account at this point is that the geometry of the screws must have aggressive shearing points and crushing areas to achieve a homogenous mixture of the pellets during their extrusion, with different distances and depths between the blades along the screw. The polyethenol paste, melted at said temperature and with the aforementioned melt flow rate, is subsequently conveyed to an injection device, which is provided with a heating element to keep the temperature thereof stable and a set of essentially conical, flared-section pipes, the inner diameter of which is oversized by between 20% and 40%, i.e., it is greater than that conventionally required for a polymer with a melt flow rate of between 10 and 30 gr/10 min, not being able to be less than 1 mm in any case. The temperature of the polyethenol as it is conveyed through the injector must be controlled by means of a thermostat and maintained at the same value as that of the extrusion, between 170 and 250°C.

Finally, the injector introduces the molten polyethenol pellets in a mould which is also heated and thermostated, where it will slowly cool and set.

In order for the polymer to have an appropriate setting, the cooling of the polyethenol must be slow, such that the dwell time in the mould is of the order of 5 times greater than that necessary in the case of another non-water-soluble polymer with the same melt flow rate in this molten phase and the demoulding temperature is between 25 and 35°C. It is therefore necessary to use a heated and thermostated mould and to prevent the cooling from occurring freely as a function of the ambient temperature.

During the cooling time of the polyethenol in the mould, the injection pressure must be maintained to prevent "shrinkage cavities" (deformation caused by the shrinkage of the product during said cooing) .

The extruder, the injector and the mould are provided with means for the forced discharge of vapours given off during the process, having a total number of vapour outlets exceeding the number of vapour outlets that would correspond to the processing of another non-water-soluble plastic of the same melt flow rate and at the same temperatures by 70 to 80%.

For the injection of a part manufactured by blowing, such as a bottle for example, the type of mould used is different, however, the parameters and features described above for an injection mould in relation to the forced extraction of gases, temperatures and setting times also apply, there being differences resulting only from the operating dynamics of the mould.

Specifically, in a blow mould the injector makes a molten polyethenol tube flow vertically through an extruder head at a temperature of between 170 and 250°C, which polyethenol is sequentially introduced into the open blow mould, which is then closed, the lower part of the polyethenol cylinder being sealed by the action of the mould; then the upper part of the molten polyethenol tube is cut, this operation being performed in hot conditions by means of a heated wire or an equivalent device; then compressed air is blown through the open upper part of the tube, the tube thereby swelling and adopting the shape of the walls of the mould; finally, controlled cooling and demoulding are performed as previously described.

By means of the previous method of injection it is possible to obtain water-soluble parts with any geometry using polyethenol pellets having high fluidity.

Parts that can be obtained by this method of injection include golf balls, boxes, insecticide dispensers, wads for rounds, tampon applicators.

### Description of the Drawings

For the purpose of illustrating that which has been described up to this point, a set of drawings is attached to the present specification forming an integral part thereof, in which two practical embodiments of the novel method have been depicted in a simplified schematic manner.

Figure 1 shows a diagram corresponding to a process according to the invention for injection moulds.

Figure 2 shows a diagram corresponding to a process according to the invention for blow moulds.

### Description of a Practical Embodiment

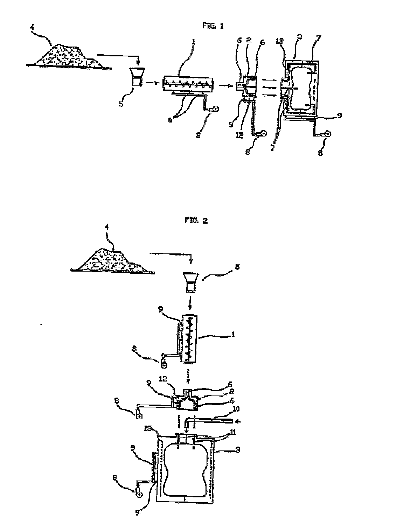

According to the embodiment of Figure 1, corresponding to a part manufactured by injection-moulding, the method requires the following elements: extruder (1), injector (2) and mould (3).

To start, the polyethenol pellets (4) are poured into a hopper (5) which delivers same to an extruder (1) provided with means for the forced discharge of gases, with a gas discharge capacity at least 23% greater than the conventional capacity in a non-water-soluble polymer.

The polyethenol must be heated and reach its molten state at a stable temperature of 190°C, at which time it has a melt flow rate of at least 11 gr/10 min.

The polyethenol pellets are subsequently conveyed to an injector (2) which is provided with a heating element (12) to keep the temperature thereof stable at 190°C and a set of essentially conical, flared-section pipes (6), the inner diameter of which is oversized by 20% with respect to that conventionally required for a polymer with a melt flow rate of between 10 and 30 gr/10 min.

Finally, the injector pours the molten polyethenol pellets into a mould (3) through different conduits (7) remaining in the mould 5 times longer than necessary in the case of another non-water-soluble polymer with the same melt flow rate. The final demoulding is carried out at 32°C, for which purpose the mould has heating means (13) which prevent the temperature thereof from dropping below this value.

The extruder (1), the injector (2) and the mould (3) are provided with means (8) for the forced discharge of vapours given off during the process, having a total number of vapour outlets (9) exceeding the number of vapour outlets that would correspond to the processing of another non-water-soluble plastic of the same melt flow rate and at the same temperatures by 75%.

According to the embodiment of Figure 2, corresponding to a part manufactured by injection-blowing, the method requires the following elements: extruder (1), injector (2) and mould (3) and blower (10).

The first two elements of the method, extruder (1) and injector (2), are identical to those already described in the previous embodiment.

The injector makes a molten polyethenol tube (11) flow vertically at a temperature of between 190°C, which polyethenol is sequentially introduced into the open blow mould (3), which is then closed, the lower part of the polyethenol cylinder being sealed by the action of the mould (3); then the upper part of the molten polyethenol tube is cut, this operation being performed in hot conditions by means of a heated wire; then compressed air is injected through the open upper part of the tube by means of a blower (10), the tube thereby swelling and adopting the shape of the walls of the mould (3); finally, controlled cooling and demoulding are performed as previously described.

## Claims

1. A method for the injection of polyethenol parts, of the type used in the production of water-soluble parts, **characterized in that** starting from polyethenol pellets with a melt flow rate comprised between 10 and 30 gr/10 min and with an amount of volatile components equal to or less than 10%, the method comprises the following steps:
- pouring the pellets into a hopper or similar device,
- delivering the pellets from the hopper to a single-screw extruder provided with means for the forced discharge of gases with a discharge capacity between 10% and 50% greater than the conventional capacity in a non-water-soluble polymer,
- heating the polyethenol or pellets to a temperature of between 170 and 250°C, the paste of the pellets having a melt flow rate of between 10 and 30 gr/10 min,
- introducing a polyethenol paste in an injector which is provided with a heating element to keep the temperature thereof stable between 170 and 50°C, a set of essentially conical, flared-section pipes, the inner diameter of which is oversized by between 20% and 40% with respect to a non-water-soluble polymer with a melt flow rate of between 10 and 30 gr/10 min,
- introducing the molten polyethenol pellets through the injector into an injection or blow mould, also heated, in which slow cooling is initiated, the dwell time in the mould being of the order of 5 times greater than that necessary in the case of another non-water-soluble polymer with the same melt flow rate, and
- demoulding at a temperature of between 25 and 35°C.

2. The method for the injection of polyethenol parts according to the previous claim, **characterized in that** the extruder, the injector and the mould are provided with means for the forced discharge of vapours given off during the process, having a total number of vapour outlets exceeding the number of vapour outlets that would correspond to the processing of another non-water-soluble plastic of the same melt flow rate and at the same temperatures by 70 to 80%.

3. A water-soluble part obtained according to the previous method, **characterized in that** when melted, it has a degree of fluidity of between 10 and 30 gr/10 min.

4. The part according to claim 3, **characterized in that** it is a golf ball.

5. The part according to claim 3, **characterized in that** it is a box.

6. The part according to claim 3, **characterized in that** it is a wad of a round.

7. The part according to claim 3, **characterized in that** it is a tampon applicator.

8. The part according to claim 3, **characterized in that** it is an insecticide dispenser.
